# EUROPEAN PATENT APPLICATION

(11) **EP 2 693 361 A1**
(43) Date of publication of application: **05.02.2014**
(21) Application number: 13175122.4
(22) Date of filing: 04.07.2013
(51) Int. Cl.: G06F 21/62

(54) **Anonymization and reattribution framework for offline identifiers**

(30) Priority: 01.08.2012 US 201213564083
(71) Applicant: Google Inc., Mountain View, CA 94043 (US)
(72) Inventor: Fredinburg, Dan, Mountain View, CA California 94093 (US); Abelin, Alex Brett, Mountain View, CA California 94093 (US)
(74) Representative: Diehl & Partner GbR

(57) **Abstract**

A method for managing information may include associating at least one offline device with personal information identifying a user. An identifier paired with the at least one offline device may be mapped to the personal information to create an identity-to-device association record. At least a portion of the identity-to-device association record may be edited by the user. The at least a portion of the identity-to-device association record may include activity information associated with the identifier paired with the at least one offline device. The personal information may be owned by the user. The activity information may include information (e.g., biometric data and/or location data) about activity of the user while using the offline device. The editing may include deleting the activity information associated with the identifier paired with the at least one offline device.

## Description

### TECHNICAL FIELD

Aspects of the present application relate generally to the field of processing data associated with a user. More specifically, certain implementations of the present disclosure relate to anonymization and reattribution framework for offline identifiers.

### BACKGROUND

The expansion of unique identifiers (e.g., barcodes, quick response (QR) codes, radio frequency identification (RFID) tags, near field communication (NFC) proximity sensors, GPS units) into the offline space means users will be at risk of significant privacy harm if such identifiers are stolen and then traced back to the respective users. As users have acquired more offline devices with identifiers (e.g., watches with NFC chips, clothing apparel with unique barcodes or QR codes, RFID tags on bicycles, etc.), they have lost the ability to manage offline analytics data related to usage of the offline device. However, companies that provide such offline analytics data are continuously exposed to numerous data security breaches (e.g., from hackers). Consequently, a compromised analysis or sales system at an analytics data company can lead to the theft of user identity information as well as information identifying the offline device(s) and their unique identifiers to potentially harm the user. Also, the sale, trade, or theft of the offline device can happen without the analytics data company understanding that their data is now incorrect as the device is being used by someone else.

Further limitations and disadvantages of conventional and traditional approaches will become apparent to one of skill in the art, through comparison of such approaches with some aspects of the present method and apparatus set forth in the remainder of this disclosure with reference to the drawings.

### BRIEF SUMMARY

A system and/or method is provided for anonymization and reattribution framework for offline identifiers, substantially as shown in and/or described in connection with at least one of the figures, as set forth more completely in the claims.

These and other advantages, aspects and novel features of the present disclosure, as well as details of illustrated implementation(s) thereof, will be more fully understood from the following description and drawings.

### BRIEF DESCRIPTION OF SEVERAL VIEWS OF THE DRAWINGS

FIG. 1 is a block diagram illustrating an example anonymization framework for users of offline devices, in accordance with an embodiment of the disclosure.

FIG. 2 is a block diagram illustrating an associations server, which may be used in the anonymization framework of FIG. 1, in accordance with an embodiment of the disclosure.

FIG. 3 is a block diagram illustrating a user device, which may be used in the anonymization framework of FIG. 1, in accordance with an embodiment of the disclosure.

FIG. 4 is a flow chart illustrating example steps of a method for anonymization of offline device identifiers and offline device activity for an offline device currently owned by a user, in accordance with an embodiment of the disclosure.

FIG. 5 is a flow chart illustrating example steps of a method for anonymization of offline device identifiers and offline device activity for a lost or stolen offline device, in accordance with an embodiment of the disclosure.

FIG. 6 is a flow chart illustrating example steps of a method for reattribution of an offline device identifier for a gifted or sold offline device, in accordance with an embodiment of the disclosure.

### DETAILED DESCRIPTION

As utilized herein the terms "circuits" and "circuitry" refer to physical electronic components (i.e. hardware) and any software and/or firmware ("code") which may configure the hardware, be executed by the hardware, and or otherwise be associated with the hardware. As utilized herein, "and/or" means any one or more of the items in the list joined by "and/or". As an example, "x and/or y" means any element of the three-element set {(x), (y), (x, y)}. As another example, "x, y, and/or z" means any element of the seven-element set {(x), (y), (z), (x, y), (x, z), (y, z), (x, y, z)}. As utilized herein, the terms "block" and "module" refer to functions than can be performed by one or more circuits. As utilized herein, the term "e.g.," introduces a list of one or more non-limiting examples, instances, or illustrations.

The present disclosure relates to a method and system for an anonymization and reattribution framework for offline identifiers. In various implementations, a secure centralized framework may be used to enable the indiscriminate mapping of offline device identifiers to user-manageable identity information in a secure fashion, thereby enabling easy anonymization and, if necessary, reattribution of activity associated with the identifier of the offline device. The anonymization aspect of the framework can be achieved by first creating an identity-to-device association record, using the user's personal information (or an identifier, such as a user name, associated with the user's personal information) and the offline device identification information. Then a single-way hashing algorithm, client-side encryption, and/or other data obfuscation techniques may be used to encrypt the association record using, for example, an encryption key, and provide high-levels of data correlation doubt to potential attackers or other personal data harvesters (e.g., government agencies and other audiences). Finally, anonymization of the association record may take place if the user destroys (e.g., deletes) the encryption key.

Additionally, when ownership of the offline device is transferred to another user, the association record may be severed and a new association may be reestablished between the offline device identifier and the new user's identity (or an identifier, such as a user name, associated with the new user's identity). In instances when the offline device is stolen or destroyed, the user may completely delete his personal information from the association record, or even delete the entire association record altogether to prevent any subsequent association of the activity of the offline device (e.g., by the person who stole it) to the original user's identity.

For example, a method for managing information may include associating at least one offline device with personal information identifying a user (or an identifier, such as a user name, associated with the new user's identity). An identifier paired with the at least one offline device may be mapped to the personal information to create an identity-to-device association record. At least a portion of the identity-to-device association record may be edited by the user. The at least a portion of the identity-to-device association record may include activity information associated with the identifier paired with the at least one offline device. The personal information may be owned by the user. The activity information may include information (e.g., biometric data and/or location data) about activity of the user while using the offline device. The editing may include deleting the activity information associated with the identifier paired with the at least one offline device.

Additionally, the editing may include anonymizing the identity-to-device association record by encrypting the identity-to-device association record or the personal information within the identity-to-device association record using an encryption key, and then destroying (e.g., deleting) the key. The identity-to-device association record may be severed by dis-associating the identifier paired with the at least one offline device from the personal information. The dis-associating may include deleting an encryption key used for the encrypting. The dis-associating may also include deleting the personal information in the identity-to-device association record. The dis-associated identifier paired with the at least one offline device may be mapped to personal information associated with another user to create another identity-to-device association record.

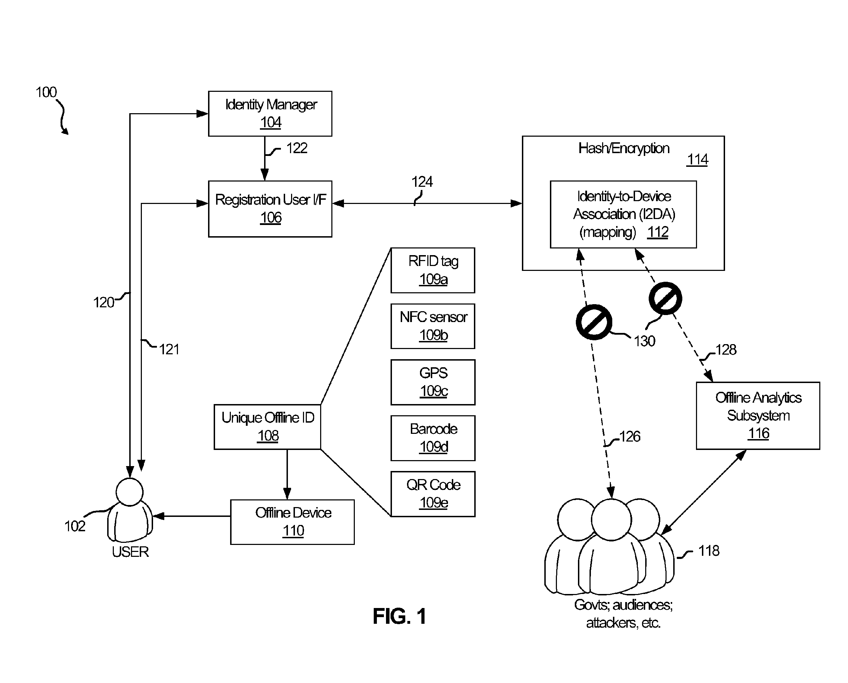

FIG. 1 is a block diagram illustrating an example anonymization framework for users of offline devices, in accordance with an embodiment of the disclosure. Referring to FIG. 1, the example framework 100 may comprise an offline device 110, a user 102, a registration user interface (I/F) 106 and an identity-to-device association (I2DA) record 112. The offline device 110 may comprise a device, which is typically not directly connectable to a network. For example, the offline device 110 may comprise various articles of clothing (e.g., t-shirts), watches, sporting goods (e.g., bicycles), and others.

The offline device 110 may be paired with at least one unique offline ID 108. The offline ID 108 may comprise, for example, a radio-frequency identification (RFID) tag 109a, a near field communication (NFC) sensor 109b, a GPS device 109c, a barcode 109d, a quick response (QR) code 109e, and/or another type of an offline ID which may allow tracking, tracing, sensing or scanning of such offline ID 108 when paired with the offline device 110. The offline device 110 (with its paired offline ID 108) may be purchased by the user 102.

The identity manager 104 may comprise suitable circuitry, logic and/or code and may be operable to manage identity information associated with the user 102. For example, identity manager 104 may be one of an Internet-based third party services for storing identity information such as personal identification information (e.g., name, address, telephone number, date of birth, passport number, driver's license number) and associated payment information (credit card number, credit card expiration date, bank name and routing number, bank account number, billing address, etc.). The identity manager may communicate with the user via communication path 120, which may be wired and/or wireless secured communication path.

The registration user I/F 106 may comprise suitable circuitry, logic, and/or code and may enable the user 102 to create and edit the identity-to-device association (I2DA) record 112 via communication paths 121 and 124. Additionally, the registration user I/F 106 may be operable to receive personal identity information of the user 102 from the identity manager 104 via communication path 122, and map the personal identity information to an offline device ID (e.g., offline ID 108) to create the I2DA record 112. In accordance with an embodiment of the disclosure, the registration user I/F 106 may be operable to receive an identifier (such as a user name) from the user and/or the identity manager 104, where the identifier is associated with the personal identity of the user.

Additionally, the registration user I/F 106 may use a single-way hashing algorithm, client-side encryption, and/or other data obfuscation techniques to provide encryption via encryption module 114 and encrypt the I2DA record 112, thereby providing high-levels of data correlation doubt to potential attackers (e.g., 118) or other personal data harvesters (e.g., offline analytics subsystem 116). The communication paths 121, 122, and 124 may be wired and/or wireless communication paths.

Potential attackers 118 may include hackers, government entities or other personal information seeking audiences. The offline analytics subsystem 116 may include one or more third-party systems for obtaining and analyzing usage or activity information. For example, the potential attackers 118 and the offline analytics subsystem 116 may use communication paths 126 and 128, respectively, to obtain partial or full access to the I2DA record 112, such as the personal identity information mapped with the offline ID 108, as well as usage or activity information associated with the offline ID 108. In this regard, the potential attackers 118 and the offline analytics subsystem 116 may gain knowledge of the personal identity of the user 102 who owns the offline device 110 paired with offline ID 108 and associated with the accessed usage or activity information

In an example anonymization cycle within the framework 100, the offline device 110 may comprise a t-shirt with a unique RFID tag 109a and/or a QR code 109e. After the user 102 purchases the offline device 110, the user may create the L2DA association record 112 based on the offline ID 108 of the purchased offline device 108, as well as the personal identity information of the user 102. More specifically, the registration user I/F 106 may receive offline ID 108 (associated with offline device 110) from the user 102 via communication path 121. The registration user I/F 106 may request and receive personal identity information of the user 102 (or an identifier, such as a user name, associated with the personal identity information) from the identity manager 104 via communication path 122. The registration user I/F may then map the offline ID 108 (which is paired with, and identifies the offline device 110) with the personal identity information of user 102, to create the I2DA record 112.

Subsequently, the registration user I/F 106 may provide encryption via encryption module 114 over the entire I2DA record 112, by using an encryption key. The user may then destroy the encryption key, thereby providing an interruption 130 in the communication paths 126 and 128 used by the potential attackers 118 and the offline analytics subsystem 116, respectively, and anonymizing the personal identity information of the user 102. In this regard, the potential attackers 118 or the offline analytics subsystem 116, which may have used communication channels 126 and 128 to access the I2DA record 112 (e.g., the personal identity information mapped with the offline ID 108), as well as usage or activity information associated with the offline ID 108, are now no longer capable of accessing the personal identity information within the I2DA record 112 and/or the usage or activity information associated with the offline ID 108.

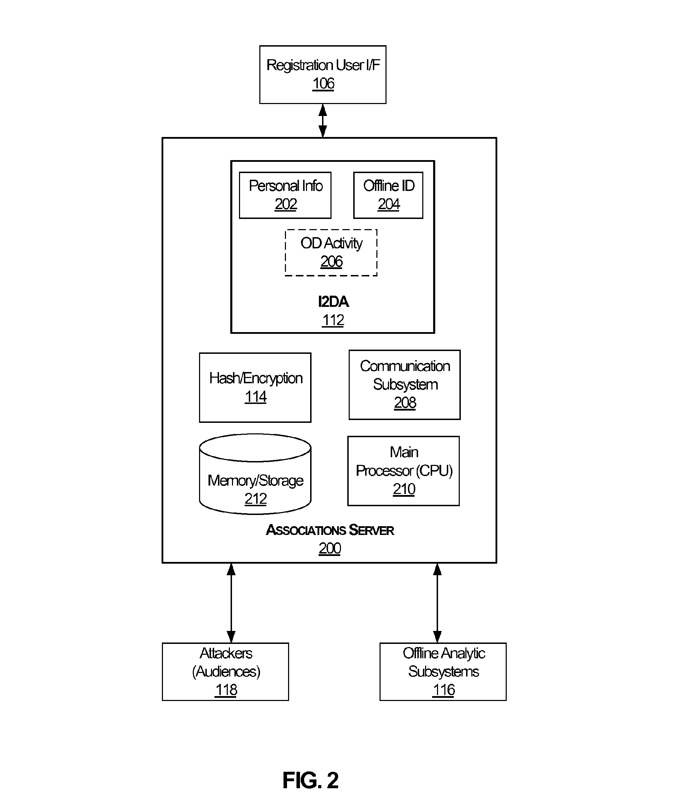

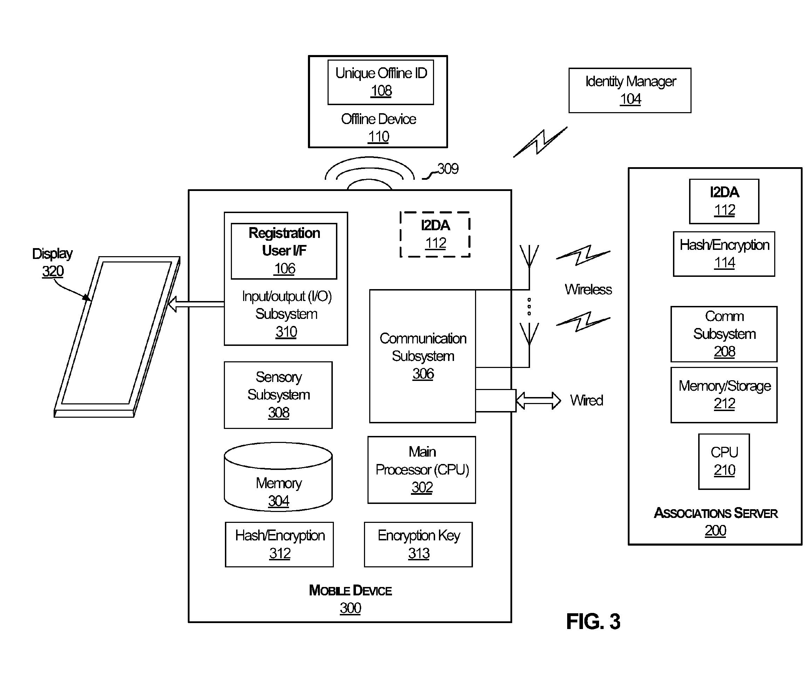

In accordance with an embodiment of the disclosure, the I2DA record 112 may comprise the personal identity information of the user 102 (or an identifier, such as a user name, associated with the personal identity information), the offline ID 108 (paired with the offline device 110), as well as activity and/or usage information associated with the offline ID 108. Alternatively, the activity and/or usage information associated with the offline ID 108 may be stored and managed by the user separately from the I2DA record 112. Additionally, the I2DA record 112 may be stored at a separate server (e.g., an associations server 200, as explained in reference to FIG. 2) or at a user device (e.g., mobile device 300, as explained in reference to FIG. 3).

FIG. 2 is a block diagram illustrating an associations server, which may be used in the anonymization framework of FIG. 1, in accordance with an embodiment of the disclosure. Referring to FIG. 2, the associations server 200 may comprise an I2DA record 112 (or a plurality of such records associated with a given user), an encryption module 114, a communication subsystem 208, memory/storage block 212, and a main processor (CPU) 210.

The communication subsystem 208 may comprise suitable circuitry, logic, and/or code and may be operable to provide communication of information to and from the associations server 200. For example, the communication subsystem 208 may include one or more transceivers for providing wired and/or wireless communication of data between the associations server 200 and other systems, such as the registration user I/F 106, the offline analytic subsystems 116, and the potential attackers 118.

The I2DA record 112, as explained in reference to FIG. 1, may comprise the personal identity information 202 of the user 102 (or an identifier, such as a user name, associated with the personal identity information), an offline device ID 204 (e.g., the offline ID 108 which is paired with the offline device 110), as well as offline device (OD) activity information 206 associated with the offline device ID 204. The I2DA record 112 may be stored, for example, in the memory/storage block 212, based on a user instruction received via the registration user I/F 106.

In an example embodiment of the disclosure, the OD activity record 206 may comprise, for example, biometric data, location data or any other type of data collected directly from the offline device ID 204, or deduced from offline device ID 204 collected data, while the corresponding offline device is being used (e.g., worn by) the user.

Even though FIG. 2 illustrates that the OD activity record 206 is part of the I2DA record 112, the present disclosure may not be limited in this regard and other arrangements may be possible. For example, the OD activity record may be stored outside of the I2DA record 112 (symbolized by a dashed-line outline of 206) within the associations server 200, within a mobile device of the user (e.g., as illustrated in FIG. 3), and/or at third-party server (e.g., at a server of the offline analytic subsystems 116). In instances when the OD activity record 206 is stored in a third-party server, the user (e.g., user 102) may still retain the capability to encrypt the OD activity record 206 associated with the user's offline device ID 204, using at least one encryption key. In this regard, the OD activity record 206 can still be anonymized by destroying the at least one encryption key, while the user retains the capability of editing and managing the OD activity record 206 via the registration user I/F 106 or another user interface.

The encryption module 114 may comprise suitable circuitry, logic, and/or code and may be operable to encrypt the I2DA record 112, as well as any other information stored in the memory/storage block 212.

In an example operation of the association server 200, the registration user I/F 106 may receive an offline device ID 204 from the user 102 via communication path 121. The registration user I/F 106 may request and receive personal identity information 202 (of the user 102) from the identity manager 104 via communication path 122. In the alternative, the registration user I/F 106 may communicate with the user to receive an identifier, such as a user name, associated with the personal identity information. The registration user I/F may then map the offline device ID 204 (which is paired with, and identifies an offline device being used by the user) with the personal identity information 202 (or the identifier) of user 102, to create the I2DA record 112. As previously explained, the I2DA record 112 may also comprise offline device activity information 206. The encryption module 114 may then encrypt the entire I2DA record 112, using at least one encryption key that is managed by the user 102. In this regard, anonymization of the I2DA record 112 may be achieved by destroying (e.g., deleting) the encryption key, thereby severing the access of audiences and potential attackers 118 and/or offline analytic subsystems 116 to the I2DA record 112 or any parts of the I2DA record 112.

Additionally, the user 102 may easily access the I2DA record 112 via the registration user interface 106 (or via another wired or wireless interface) and edit any or all of the I2DA record 112 parts. Namely, the user 102 may edit any portions of the personal identity information 202 and/or the offline device activity information 206, for example.

FIG. 3 is a block diagram illustrating a user device, which may be used in the anonymization framework of FIG. 1, in accordance with an embodiment of the disclosure. Referring to FIG. 3, the mobile device 300 may comprise suitable logic, circuitry, interfaces, and/or code that may be operable to implement various aspects of the anonymization framework 100 of FIG. 1. The mobile device 300 may comprise, for example, a main processor 302, a system memory 304, a communication subsystem 306, a sensory and input/output (I/O) subsystem 308, an input/output (I/O) subsystem 310, and a display 320.

The main processor 302 may comprise suitable logic, circuitry, interfaces, and/or code that may be operable to process data, and/or control and/or manage operations of the mobile device 300, and/or tasks and/or applications performed therein in connection with the anonymization framework 100. In this regard, the main processor 302 may be operable to configure and/or control operations of various components and/or subsystems of the mobile device 300, by utilizing, for example, one or more control signals. The main processor 302 enables running and/or execution of applications, programs and/or code, which may be stored, for example, in the system memory 304. Alternatively, one or more dedicated application processors may be utilized for running and/or executing applications (or programs) in the mobile device 300.

In some instances, one or more of the applications running and/or executing on the mobile device 300 may generate and/or update video content that may be rendered via the display 320. In other instances, one or more of the applications running and/or executing on the mobile device 300 may be used to perform functionalities explained herein in reference to the anonymization framework 100. For example, an application may use the registration user I/F 106 and/or the sensory subsystem 308 to register an offline device (e.g., 110), obtain the ID associated with the offline device (e.g., 108), create the I2DA record 112, as well as encrypt, store, edit and/or manage the I2DA record 112 or any parts thereof (e.g., the personal identity information 202 (or an identifier, such as a user name, associated with the personal identity information) and/or the offline device activity record 206).

The system memory 304 may comprise suitable logic, circuitry, interfaces, and/or code that may enable permanent and/or non-permanent storage, buffering, and/or fetching of data, code and/or other information, which may be used, consumed, and/or processed. In this regard, the system memory 304 may comprise different memory technologies, including, for example, read-only memory (ROM), random access memory (RAM), Flash memory, solid-state drive (SSD), and/or field-programmable gate array (FPGA). The system memory 304 may store, for example, configuration data, which may comprise parameters and/or code, comprising software and/or firmware.

The communication subsystem 306 may comprise suitable logic, circuitry, interfaces, and/or code operable to communicate data from and/or to the mobile device, such as via one or more wired and/or wireless connections. The communication subsystem 306 may be configured to support one or more wired protocols (e.g., Ethernet standards, MOCA, etc.) and/or wireless protocols or interfaces (e.g., Bluetooth, WiFi, cellular, WiMAX, and/or any other available wireless protocol/interface), facilitating transmission and/or reception of signals to and/or from the mobile device 300, and/or processing of transmitted or received signals in accordance with applicable wired or wireless protocols. In this regard, signal processing operations may comprise filtering, amplification, analog-to-digital conversion and/or digital-to-analog conversion, up-conversion/down-conversion of baseband signals, encoding/decoding, encryption/ decryption, and/or modulation/demodulation. In accordance with an embodiment of the disclosure, the communication subsystem 306 may provide wired and/or wireless connections to, for example, the identity manager 104 and/or the associations server 200.

The sensory subsystem 308 may comprise suitable logic, circuitry, interfaces, and/or code for obtaining and/or generating sensory information, which may relate to the mobile device 300, its user(s), and/or its environment. For example, the sensory and I/O subsystem 308 may comprise positional or locational sensors (e.g., GPS or other GNSS based sensors), ambient conditions (e.g., temperature, humidity, or light) sensors, and/or motion related sensors (e.g., accelerometer, gyroscope, pedometers, and/or altimeters).

In accordance with an embodiment of the disclosure, the sensory subsystem 308 may provide scanning and/or sensory capabilities 309, which may be used to detect an offline ID 108 paired with an offline device 110. For example, the sensory subsystem 308 may provide scanning and/or sensory capabilities 309 for detecting an RFID tag 109a, an NFC sensor 109b, a barcode 109d, and/or QR code 109e. After the sensory subsystem 308 detects the offline ID 108, the offline ID 108 may be used, for example, by the registration user I/F 106 to create the I2DA record 112.

The I/O subsystem 310 may comprise suitable logic, circuitry, interfaces, and/or code for enabling user interactions with the mobile device 300, enabling obtaining input from user(s) and/or to providing output to the user(s). In this regard, the I/O subsystem 310 may comprise the registration user I/F 106 to enable communication between the user 102 and, for example, the offline device 110, the identity manager 104 and/or the associations server 200.

The I/O subsystem 310 may support various types of inputs and/or outputs, including, for example, video, audio, and/or textual. In this regard, dedicated I/O devices and/or components, external to or integrated within the mobile device 300, may be utilized for inputting and/or outputting data during operations of the I/O subsystem 310. Example I/O devices may comprise displays, mice, keyboards, touchscreens, voice input interfaces, and other input/output interfaces or devices. With respect to video outputs, the I/O subsystem 310 may be operable to generate and/or process video content, graphics, and/or textual data, and/or generate video frames based thereon for display, via the display 320 for example.

The display 320 may comprise suitable logic, circuitry, interfaces and/or code that may enable displaying of video content, which may be handled and/or processed via the I/O subsystem 310. The display 320 may be used in outputting video data, which may comprise contacts lists.

In operation, the mobile device 200 may be utilized (e.g., by user 102) to perform, execute, or run various tasks and/or applications associated with the anonymization framework 100. For example, the user 102 of mobile device 300 may use the registration user I/F 106 and the scanning and/or sensory capabilities 309 of the sensory subsystem 308 to obtain the offline ID 108 paired with the offline device 110. The user 102 may also use the registration user I/F 106 and the communication subsystem 306 to obtain personal identity information (e.g., 202), or an identifier, such as a user name, associated with the personal identity information, from the identity manager 104. The user 102 may then use the registration user I/F 106 to initiate mapping of the personal identity information (e.g., 202), or the identifier associated with the personal identity information, with the offline ID 108 to create the I2DA record 112. Optionally, the I2DA record 112 may also include offline device activity information (e.g., 206), associated with detected activities of the offline ID 108. Additionally, the user 102 may anonymize the I2DA record 112 by encrypting it within the mobile device 300 using the encryption block 312 and an encryption key 313, storing the encrypted I2DA record 112 in memory 304 or remotely (e.g., at the associations server 200), and then destroying the encryption key 313.

In example embodiment of the disclosure, the user 102 may use the registration user I/F 106 to edit (including deletion) and/or manage the I2DA record 112 or any parts thereof (e.g., the personal identity information 202 and/or the offline device activity record 206), regardless of the I2DA record 112 location.

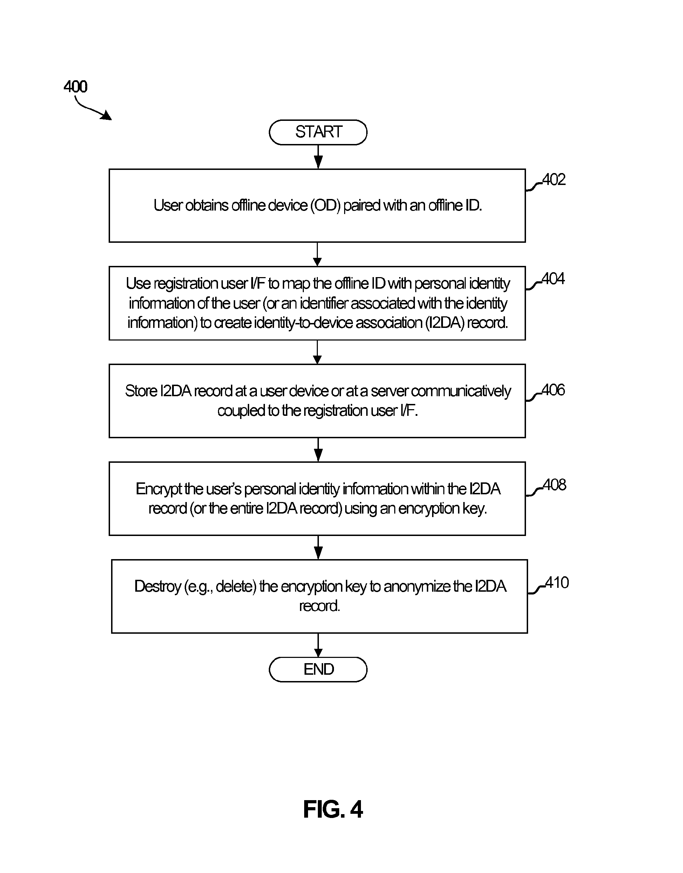

FIG. 4 is a flow chart illustrating example steps of a method for anonymization of offline device identifiers and offline device activity for an offline device currently owned by a user, in accordance with an embodiment of the disclosure. Referring to FIGS. 1-4, the method 400 may start at 402, when the user 102 may obtain the offline device 110. The offline device 110 may be paired with an offline ID 108 or 204 (e.g., one or more of IDs 109a, ..., 109e). At 404, the user 102 may use the registration user I/F 106 to map the offline ID 108 or 204 with personal identification information 202 (or an identifier, such as a user name, associated with the personal identity information 202) received from the identity manager 104, to create the I2DA record 112. At 406, the I2DA record 112 may be stored at a user device (e.g., mobile device 300) or at a remote server (e.g., the associations server 200).

At 408, the user 102 may use the encryption block 114 (within the associations server 200) or the encryption block 312 (within the mobile device 300) to encrypt the user's personal identity information (e.g., 202), the offline device activity information 206 or the entire I2DA record 112 using an encryption key 313. At 410, the encryption key 313 may be destroyed. In this regard, by encrypting parts (or the entirety) of I2DA record 112 and then destroying (e.g., deleting) the encryption key, the user in effect anonymizes his personal identity information 202 and/or the offline device activity information 206 (associated with activities of the offline device 110 while in user's possession) so that such information may not be accessed by third parties (e.g., potential attackers 118 or offline analytics subsystems 116).

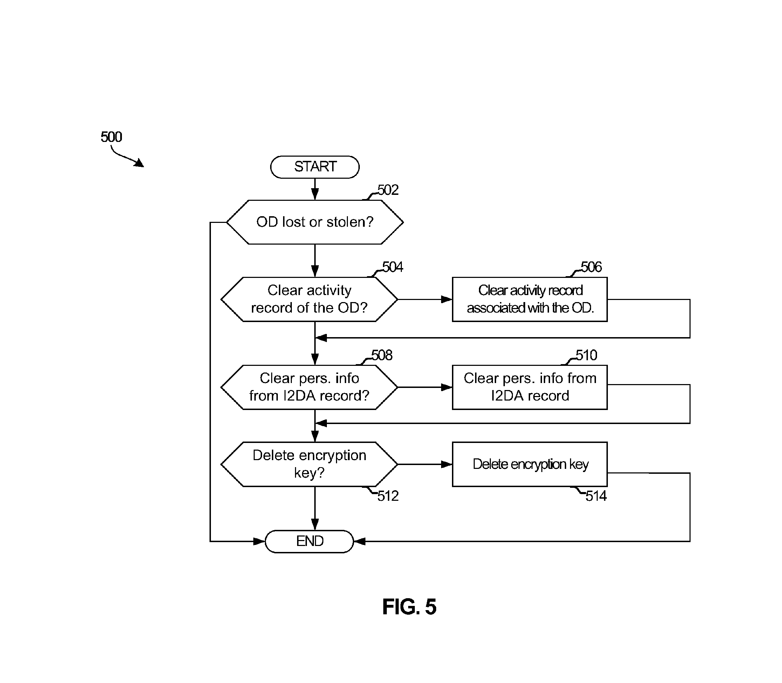

FIG. 5 is a flow chart illustrating example steps of a method for anonymization of offline device identifiers and offline device activity for a lost or stolen offline device, in accordance with an embodiment of the disclosure. Referring to FIGS. 1-3 and 5, the example method 500 may start at 502, when it may be determined whether the offline device 110 has been lost or stolen. If the offline device 110 has been lost or stolen, processing may continue to one or more of steps 504-514, where appropriate measures may be taken by the user 102 to sever the I2DA record 112, and disassociate the user's personal identity information 202 from any subsequent offline device activity (as reflected by record 206) occurring after the offline device has been lost or stolen.

For example, at 504, it may be determined whether the offline device activity record 206 should be cleared, and if so, at 506 the user may use the registration user I/F 106 (or another user I/F within the mobile device 300) to clear (or delete) the offline device activity record 206 (stored at the mobile device 300, the associations server 200 or at another third-party server).

At 508, it may be determined whether the personal identity information 202 should be cleared, and if so, at 510 the user may use the registration user I/F 106 (or another user I/F within the mobile device 300) to clear (or delete) the personal identity information 202 within the I2DA record 112 (stored at the mobile device 300, the associations server 200 or at another third-party server).

At 512, it may be determined whether the encryption key (e.g., 313) should be destroyed, and if so, at 514 the user may use the registration user I/F 106 (or another user I/F within the mobile device 300) to delete the encryption key (e.g., 313) used to encrypt the I2DA record 112 (stored at the mobile device 300, the associations server 200 or at another third-party server).

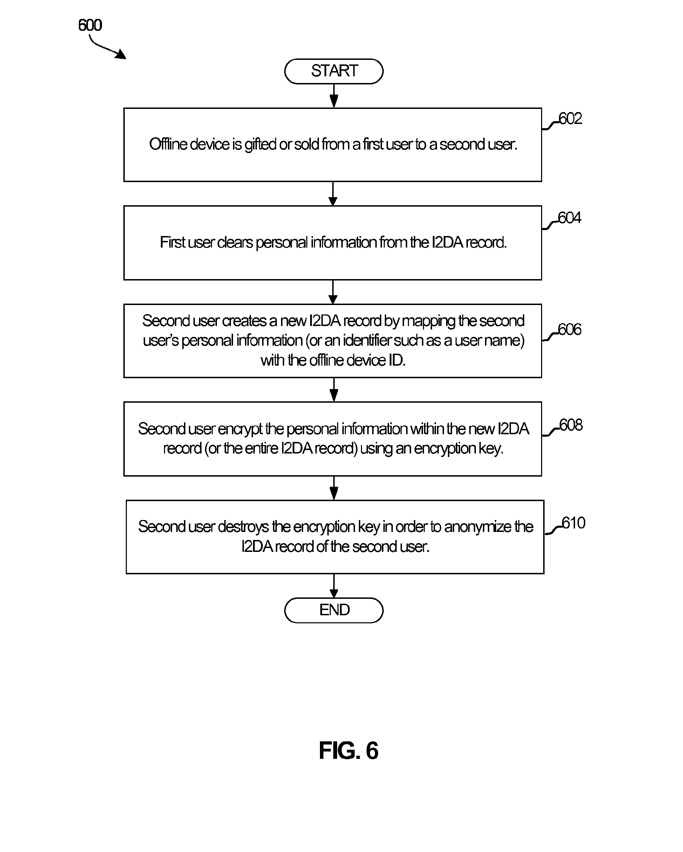

FIG. 6 is a flow chart illustrating example steps of a method for reattribution of an offline device identifier for a gifted or sold offline device, in accordance with an embodiment of the disclosure. Referring to FIGS. 1-3 and 6, the method 600 may be used in instances when the offline device 110 is gifted or sold from a first user to a second user (i.e., a transfer of ownership from the first user to the second user takes place). In such circumstances, the first user may take steps to disassociate himself from the offline device 110 (and its offline ID 108) so that reattribution of the offline device 110 to the second user may take place (e.g., the second user may register the offline device in his name and create his own I2DA record).

For example, at 602, the offline device 110 may be gifted or sold from a first user to a second user (i.e., the transfer of ownership from the first user to the second user takes place). At 604, the first user (e.g., 102) may clear his personal identity information (e.g., 202), or the identifier (if the user used an identifier, such as a user name, to associate with his personal identity information) from the I2DA record 112.

At 606, the second user may create his own I2DA record by mapping his own personal identity information with the offline ID 108 of the newly obtained offline device 110. In accordance with an embodiment of the disclosure, in instances when an identifier (e.g., a user name associated with the personal identity information of the first user) is used to create the I2DA record, the second user may, upon transferring of ownership from the first user to the second user, set his own user name (as an identifier associated with his personal identity information) for purposes of creating a new I2DA record upon transfer of ownership of the offline device.

At 608, the second user may encrypt his personal identity information within the I2DA record, or the entire I2DA record, using an encryption key. At 610, the second user may destroy the encryption key. In this regard, after the second user takes ownership of the offline device 110, the first user is disassociated from the offline ID 108 and a new I2DA record is created for the second user based on his own identity information or an identifier (such as a user name) associated with his personal identity information. Furthermore, the newly created I2DA record can be anonymized when the encryption key used to encrypt the I2DA record for the second user is destroyed.

Other implementations may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for managing information.

Accordingly, the present method and/or system may be realized in hardware, software, or a combination of hardware and software. The present method and/or system may be realized in a centralized fashion in at least one computer system, or in a distributed fashion where different elements are spread across several interconnected computer systems. Any kind of computer system or other system adapted for carrying out the methods described herein is suited. A typical combination of hardware and software may be a general-purpose computer system with a computer program that, when being loaded and executed, controls the computer system such that it carries out the methods described herein.

The present method and/or system may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present method and/or apparatus has been described with reference to certain implementations, it will be understood by those skilled in the art that various changes may be made and equivalents may be substituted without departing from the scope of the present method and/or apparatus. In addition, many modifications may be made to adapt a particular situation or material to the teachings of the present disclosure without departing from its scope. Therefore, it is intended that the present method and/or apparatus not be limited to the particular implementations disclosed, but that the present method and/or apparatus will include all implementations falling within the scope of the appended claims.

A method for managing information may include associating at least one offline device with personal information identifying a user. An identifier paired with the at least one offline device may be mapped to the personal information to create an identity-to-device association record. At least a portion of the identity-to-device association record may be edited by the user. The at least a portion of the identity-to-device association record may include activity information associated with the identifier paired with the at least one offline device. The personal information may be owned by the user. The activity information may include information (e.g., biometric data and/or location data) about activity of the user while using the offline device. The editing may include deleting the activity information associated with the identifier paired with the at least one offline device.

The subject matter of the following paragraphs is further disclosed in the present application and may be claimed in the present application or a divisional application derived therefrom:

A method for managing information, comprising: associating at least one offline device with personal information identifying a user; mapping an identifier paired with the at least one offline device to the personal information to create an identity-to-device association record; and editing, by the user, at least a portion of the identity-to-device association record, wherein the at least a portion of the identity-to-device association record comprises activity information associated with the identifier paired with the at least one offline device.

The method according to paragraph [0062], wherein the personal information is owned by the user.

The method according to paragraph [0062] or paragraph [0063], wherein the activity information comprises information about activity of the user while using the offline device.

The method according to paragraph [0064], wherein the information about the activity of the user comprises one or both of biometric data and location data.

The method according to one of paragraphs [0062] to [0065], wherein the editing comprises deleting the activity information associated with the identifier paired with the at least one offline device.

The method according to one of paragraphs [0062] to [0066], wherein the editing comprises anonymizing the identity-to-device association record by encrypting one of: the identity-to-device association record or the personal information within the identity-to-device association record.

The method according to one of paragraphs [0062] to [0067], comprising severing the identity-to-device association record by dis-associating the identifier paired with the at least one offline device from the personal information.

The method according to paragraph [0068], wherein the dis-associating comprises deleting an encryption key used for the encrypting.

The method according to one of paragraphs [0068] or [0069], wherein the dis-associating comprises deleting the personal information in the identity-to-device association record.

The method according to one of paragraphs [0068] to [0070], comprising mapping the dis-associated identifier paired with the at least one offline device to personal information associated with another user to create another identity-to-device association record.

A system for managing information, comprising: a mobile device, the mobile device being operable to perform the method of one of paragraphs [0062] to [0071].

A system for managing information, comprising: a mobile device, the mobile device being operable to: associate at least one offline device with personal information identifying a user; map an identifier paired with the at least one offline device to the personal information to create an identity-to-device association record; and enable editing, by the user, of at least a portion of the identity-to-device association record, wherein the at least a portion of the identity-to-device association record comprises activity information associated with the identifier paired with the at least one offline device.

The system according to paragraph [0073], wherein the activity information comprises information about activity of the user while using the offline device.

The system according to paragraph [0073] or paragraph [0074], wherein the editing comprises deleting the activity information associated with the identifier paired with the at least one offline device.

The system according to one of paragraphs [0073] to [0075], wherein the editing comprises anonymizing the identity-to-device association record by encrypting one of: the identity-to-device association record or the personal information within the identity-to-device association record.

The system according to one of paragraphs [0073] to [0076], wherein the mobile device is operable to sever the identity-to-device association record by dis-associating the identifier paired with the at least one offline device from the personal information.

The system according to paragraph [0077], wherein the dis-associating comprises deleting an encryption key used for the encrypting.

The system according to paragraph [0077] or paragraph [0078], wherein the dis-associating comprises deleting the personal information in the identity-to-device association record.

The system according to one of paragraphs [0073] to [0079], wherein the mobile device is operable to map the dis-associated identifier paired with the at least one offline device to personal information associated with another user to create another identity-to-device association record.

A method for managing information, comprising: storing, in a network device, at least one association record, wherein: the association record comprises identification information of a device owned by a user and personal identification information of the user, and the identification information comprises a traceable identifier for tracing the activity of the device; encrypting one of the personal identification information of the user or the at least one association record using an encryption key; and upon a change in ownership of the device, editing the at least one association record by deleting the personal identification information of the user.

The method according to paragraph [0081], wherein: the at least one association record comprises device activity information associated with the traceable identifier; and the editing comprises deleting the device activity information.

## Claims

1. A method for managing information, comprising:
associating at least one offline device with personal information identifying a user;
mapping an identifier paired with the at least one offline device to the personal information to create an identity-to-device association record; and
editing, by the user, at least a portion of the identity-to-device association record,
wherein the at least a portion of the identity-to-device association record comprises activity information associated with the identifier paired with the at least one offline device.

2. The method according to claim 1, wherein the personal information is owned by the user.

3. The method according to claim 1 or 2, wherein the activity information comprises information about activity of the user while using the offline device.

4. The method according to claim 3, wherein the information about the activity of the user comprises one or both of biometric data and location data.

5. The method according to one of claims 1 to 4, wherein the editing comprises deleting the activity information associated with the identifier paired with the at least one offline device.

6. The method according to one of claims 1 to 5, wherein the editing comprises anonymizing the identity-to-device association record by encrypting one of: the identity-to-device association record or the personal information within the identity-to-device association record.

7. The method according to one of claims 1 to 6, comprising severing the identity-to-device association record by dis-associating the identifier paired with the at least one offline device from the personal information.

8. The method according to claim 7, wherein the dis-associating comprises deleting an encryption key used for the encrypting.

9. The method according to claim 7 or 8, wherein the dis-associating comprises deleting the personal information in the identity-to-device association record.

10. The method according to claim 7, 8 or 9, comprising mapping the dis-associated identifier paired with the at least one offline device to personal information associated with another user to create another identity-to-device association record.

11. A system for managing information, comprising:
a mobile device, the mobile device being operable to perform the method of one of claims 1 to 10, wherein the mobile device is operable to enable the step of editing, by the user, at least a portion of the identity-to-device association record.

12. A method for managing information, comprising:
storing, in a network device, at least one association record, wherein:
the association record comprises identification information of a device owned by a user and
personal identification information of the user, and
the identification information comprises a traceable identifier for tracing the activity of the device;
encrypting one of the personal identification information of the user or the at least one association record using an encryption key; and
upon a change in ownership of the device, editing the at least one association record by deleting the personal identification information of the user.

13. The method according to claim 12, wherein:
the at least one association record comprises device activity information associated with the traceable identifier; and
the editing comprises deleting the device activity information.
